# EUROPÄISCHE PATENTSCHRIFT

(11) **EP 1 165 352 B1**
(45) Veröffentlichungstag und Bekanntmachung des Hinweises auf die Patenterteilung: **04.07.2007**
(21) Anmeldenummer: 00990637.1
(22) Anmeldetag: 04.12.2000
(51) Int. Cl.: B60W 30/02, B60W 30/18

(54) **VERFAHREN ZUR BEEINFLUSSUNG EINES VON EINEM ANTRIEBSMOTOR EINES KRAFTFAHRZEUGS ABGEGEBENEN MOMENTS**
METHOD FOR INFLUENCING A TORQUE CONVEYED BY A DRIVING MOTOR OF A MOTOR VEHICLE
PROCEDE POUR INFLUENCER UN COUPLE FOURNI PAR UN MOTEUR D'ENTRAINEMENT D'UN VEHICULE

(30) Priorität: 03.12.1999 DE 19958392
(43) Veröffentlichungstag der Anmeldung: 02.01.2002
(73) Patentinhaber: ROBERT BOSCH GMBH, 70469 Stuttgart (DE)
(72) Erfinder: SCHMITT, Johannes, 71706 Markgröningen (DE); WEISS, Tobias, 70839 Gerlingen (DE)
(86) Internationale Anmeldenummer: PCT/EP2000/012163
(87) Internationale Veröffentlichungsnummer: WO 2001/040041

(56) Entgegenhaltungen:
- EP-A- 0 434 970
- DE-A- 3 808 692
- DE-A- 19 547 717
- US-A- 4 966 111

## Beschreibung

Die vorliegende Erfindung betrifft ein Verfahren zur Beeinflussung eines von einem Antriebsmotor eines Kraftfahrzeugs abgegebenen Moments. Bei dem Verfahren wird
- ein während einer Kurvenfahrt des Kraftfahrzeugs auftretender Lastwechsel ermittelt;
- ein Minimalwert einer das abgegebene Moment beeinflussende Eingriffsgröße ermittelt, falls während einer Kurvenfahrt ein Lastwechsel auftritt; und
- der Antriebsmotor für eine vorgebbare Zeitdauer mit dem Minimalwert der Eingriffsgröße beaufschlagt.

Die Erfindung betrifft außerdem ein Steuergerät für eine Fahrdynamikregelung eines Kraftfahrzeugs. Das Steuergerät
- ermittelt einen während einer Kurvenfahrt des Kraftfahrzeugs auftretenden Lastwechsel;
- ermittelt einen Minimalwert einer Eingriffsgröße, die ein von einem Antriebsmotor des Kraftfahrzeugs abgegebenes Moment beeinflusst, falls während einer Kurvenfahrt ein Lastwechsel auftritt; und
- beaufschlagt den Antriebsmotor für eine vorgebbare Zeitdauer mit dem Minimalwert der Eingriffsgröße.

Die vorliegende Erfindung betrifft des Weiteren ein Speicherelement für ein Steuergerät einer Fahrdynamikregelung eines Kraftfahrzeugs. Das Speicherelement ist insbesondere als ein Read-Only-Memory, als ein Random-Access-Memory oder als ein Flash-Memory ausgebildet. Auf dem Speicherelement ist ein Computerprogramm abgespeichert, das auf einem Rechengerät, insbesondere auf einem Mikroprozessor, ablauffähig ist. Schließlich betrifft die Erfindung auch ein solches Computerprogramm.

### Stand der Technik

Verfahren und Vorrichtungen zur Beeinflussung des Moments eines Antriebsmotors eines Kraftfahrzeugs sind aus dem Stand der Technik in vielerlei Modifikationen bekannt.

So ist aus der EP 0 434 970 B1 ein Verfahren zur Kraftstoffzumessung einer Brennkraftmaschine im Schubbetrieb bekannt. Der Schubbetrieb wird durch die Stellung des Fahrpedals und die Drehzahl der Brennkraftmaschine ermittelt. Die Kraftstoffzumessung im Schubbetrieb wird abhängig von einem aktuellen Fahrzustand des Kraftfahrzeugs bestimmt. Bei dem aktuellen Fahrzustand wird zumindest zwischen Kurvenfahrt und Geradeausfahrt des Kraftfahrzeug unterschieden. Bei einer festgestellten Kurvenfahrt ergibt sich zumindest unter bestimmten Betriebsbedingungen der Brennkraftmaschine eine andere Kraftstoffzumessung im Schubbetrieb als bei Geradeausfahrt.

Zur Bewertung des aktuellen Fahrzustands werden ferner die Geschwindigkeit des Kraftfahrzeugs und/oder die Drehzahl der Brennkraftmaschine und/oder die Stellung einer Gangschaltung und/oder ein Ausgangssignal einer Kurvenfahrterkennung und/oder eine auf das Kraftfahrzeug wirkende Querbeschleunigung und/oder der Reibwert der Fahrbahn und/oder ein Schlupf eines der Räder des Kraftfahrzeugs, insbesondere eines Antriebsrades, verarbeitet.

Hinsichtlich der Kurvenfahrt wird lediglich ermittelt, ob eine Kurvenfahrt vorliegt oder nicht. Eine Ermittlung, ob während der Kurvenfahrt gleichzeitig ein Lastwechsel vorliegt, wird nicht vorgenommen. D. h. die Beeinflussung der Kraftstoffzumessung im Schubbetrieb findet während einer Kurvenfahrt in jedem Fall statt, selbst dann, wenn während der Kurvenfahrt kein Lastwechsel vorliegt.

Aus der DE 38 08 692 A1 ist ein Verfahren zur Vermeidung eines zu großen Schleppmoments bekannt. Dabei wird bei Rücknahme des Fahrpedals eine drehzahlabhängige Restmenge abhängig von der sich einstellenden Drehzahländerung zeitlich rampenförmig erniedrigt oder erhöht. Zusätzlich ist die drehzahlabhängige Restmenge von weiteren Motorbetriebsparametern, wie bspw. der Motortemperatur, abhängig.

Ein Verfahren zur Kraftstoffzumessung im Schubbetrieb bzw. eine Schleppmomentbeeinflussung bzw. -regelung kann bspw. in einer Antriebsschlupfregelung, wie sie in dem SAE-Paper 870 337 "ASR-Traction Control - A Logical Extension of ABS" beschrieben ist, oder in einer Gierratenregelung, wie sie aus der in der Automobiltechnischen Zeitschrift (ATZ) 96, 1994, Heft 11 auf den Seiten 674 bis 689 erschienenen Veröffentlichung "FDR - Die Fahrdynamikregelung von BOSCH" bekannt ist, d. h. in den klassischen Schlupfregelungen, eingesetzt werden.

Ferner kann sie auch in einem Verfahren zur Einstellung des Vortriebs, wie es in der deutschen Patentanmeldung DE 199 13 825 beschrieben ist, eingesetzt werden. Dieses Verfahren arbeitet folgendermaßen: Unter Verwendung von Kennfeldern wird eine Eingriffsgröße ermittelt. Hierzu sind zwei Kennfelder vorgesehen. Anhand eines ersten Kennfeldes wird abhängig vom Gradienten des Schlupfes von einer Referenzgeschwindigkeit des Kraftfahrzeugs ein erster Wert für die Eingriffsgröße gebildet. Anhand eines zweiten Kennfeldes wird in Abhängigkeit von dem Schlupf und der Referenzgeschwindigkeit des Kraftfahrzeugs ein zweiter Wert für die Eingriffsgröße gebildet. Die Eingriffsgröße an sich ergibt sich aus den beiden Werten bspw. durch Addition. In Abhängigkeit der Eingriffsgröße wird der Vortrieb des Kraftfahrzeugs eingestellt.

Ferner ist der Einsatz einer Schleppmomentenbeeinflussung auch in einer Vorrichtung denkbar, wie sie in der deutschen Patentanmeldung DE 198 44 912 beschrieben ist. Bei dieser Vorrichtung wird in Abhängigkeit einer Querbeschleunigung und einer weiteren Größe, die das zeitliche Verhalten der Querbeschleunigung beschreibt, eine Eingriffsgröße ermittelt. Die Ermittlung der Eingriffsgröße erfolgt unter Verwendung zweier Kennfelder, einem ersten Kennfeld für die Querbeschleunigung und einem zweiten Kennfeld für die weitere Größe. Zur Beeinflussung des Vortriebs werden Eingriffe in den Antriebsmotor durchgeführt, wobei die Eingriffe in Abhängigkeit der Eingriffsgröße vorgenommen werden.

Aus der deutschen Patentanmeldung DE 195 47 717 A1 ist ein Verfahren zur Beeinflussung eines von einer Brennkraftmaschine eines Kraftfahrzeugs abgegebenen Moments bekannt. Bei dem bekannten Verfahren wird zunächst eine Kurvenfahrt des Kraftfahrzeugs ermittelt. Sobald eine Kurvenfahrt vorliegt, wird überprüft, ob ein Lastwechsel gegeben ist. Falls während einer Kurvenfahrt ein Lastwechsel detektiert wird, wird die der Brennkraftmaschine zuzuführende Kraftstoffmenge angehoben, was zu einer Steigerung des von der Brennkraftmaschine abgegebenen Moments führt. Die Zumessung der erhöhten Kraftstoffmenge erfolgt für eine vorgebbare Zeitdauer.

Ausgehend von dem eingangs beschriebenen Stand der Technik liegt der vorliegenden Erfindung die Aufgabe zugrunde, eine Verbesserung des Lastwechselverhaltens eines Kraftfahrzeuges bei Kurvenfahrt und eine Verbesserung des Fahrverhaltens des Kraftfahrzeugs im Schubbetrieb zu erreichen.

Zur Lösung dieser Aufgabe schlägt die Erfindung ausgehend von dem Verfahren der eingangs genannten Art vor, dass der ermittelte Minimalwert der Eingriffsgröße und/oder die Zeitdauer, für die der Antriebsmotor mit dem Minimalwert beaufschlagt wird, in Abhängigkeit von dem Reibwert einer Fahrbahn, auf der das Kraftfahrzeug fährt, und/oder in Abhängigkeit von einer Verzögerung des Kraftfahrzeugs korrigiert wird.

### Vorteile der Erfindung

Bei plötzlichem Gaswegnehmen in einer Kurve können die angetriebenen Räder eines Kraftfahrzeugs in Bremsschlupf geraten. Falls es sich bei den Antriebsrädern um die Hinterräder des Fahrzeugs handelt, kann in dieser Situation das Heck des Fahrzeugs ausbrechen. Um dies zu verhindern, wird in dieser Situation für die Eingriffsgröße ein Minimalwert vorgegeben, der aus Gründen der fahrdynamischen Stabiltät des Kraftfahrzeugs in dieser Situation nicht unterschritten werden sollte.

Bei einer Fahrbahn mit einem niedrigen Reibwert oder bei einer hohen Verzögerung des Kraftfahrzeugs während einer Kurvenfahrt wird die Gefahr eines ausbrechenden Hecks des Fahrzeugs weiter erhöht. Ein vorgegebener Minimalwert, der bei griffiger Fahrbahn oder einer geringen Verzögerung eine ausreichende fahrdynamische Stabilität des Fahrzeugs sicherstellt, kann bei rutschiger Fahrbahn oder bei einer starken Verzögerung des Fahrzeugs zu einem Ausbrechen des Hecks führen. Um dies zu verhindern wird der vorgegebene Minimalwert der Eingriffsgröße bzw. die Zeitdauer, während der der Antriebsmotor mit dem Minimalwert beaufschlagt wird, bei dem erfindungsgemäßen Verfahren in Abhängigkeit des Reibwerts der Fahrbahn bzw. der Verzögerung des Fahrzeugs nach oben korrigiert. Der Minimalwert der Eingriffsgröße kann, bspw. bei einer Fahrbahn mit einem besonders hohen Reibwert oder einer besonders geringen Verzögerung des Kraftfahrzeugs, aber auch nach unten korrigiert werden.

Erfindungsgemäß wird also der Reibwert der Fahrbahn bei der Ermittlung des Minimalwerts der Eingriffsgröße berücksichtigt. Das von dem Antriebsmotor des Kraftfahrzeugs abgegebene Moment wird in Abhängigkeit des Reibwerts der Fahrbahn beeinflusst. Da der Reibwert der Fahrbahn einen wichtigen Einfluss auf die Fahrstabilität des Kraftfahrzeugs bei Kurvenfahrt und insbesondere bei einem Lastwechsel während der Kurvenfahrt hat, kann mit dem erfindungsgemäßen Verfahren das Lastwechselverhalten des Kraftfahrzeugs deutlich verbessert und die fahrdynamische Stabilität des Fahrzeugs entscheidend erhöht werden.

Des Weiteren wird bei dem erfindungsgemäßen Verfahren eine Verzögerung des Kraftfahrzeugs bei der Ermittlung des Minimalwerts der Eingriffsgröße berücksichtigt. Das von dem Antriebsmotor des Kraftfahrzeugs abgegebene Moment wird in Abhängigkeit der Verzögerung beeinflusst. Auch das Verzögerungsverhalten des Kraftfahrzeugs hat einen entscheidenden Einfluss auf das Lastwechselverhalten während einer Kurvenfahrt und auf das Fahrdynamikverhalten des Kraftfahrzeugs. Die Verzögerung des Kraftfahrzeugs kann alternativ oder zusätzlich zu dem Reibwert der Fahrbahn berücksichtigt werden.

Die Verzögerung des Kraftfahrzeugs kann bspw. mittels eines Beschleunigungssensors oder durch Auswerten der Bremsaktivität ermittelt werden. Der Reibwert der Fahrbahn kann bspw. durch Auswerten der Drehzahlen der Räder, insbesondere durch einen Vergleich der Drehzahl der angetriebenen Räder mit der Drehzahl der nicht angetriebenen Räder, ermittelt werden. Es ist auch denkbar, den Reibwert der Fahrbahn mittels geeigneter Reifensensoren zu ermitteln, die als in die Reifenwand eingearbeitete Dehnmessstreifen (DMS) ausgebildet sein können. Ein Übergang von Haftreibung zu Gleitreibung kann durch einen Sprung in den Ausgangssignalen der Reifensensoren ermittelt werden. Zusammen mit der Querbeschleunigung, die auf das Kraftfahrzeug wirkt, und anderer Fahrzeugparameter kann dann der Reibwert der Fahrbahn ermittelt werden. Der Reibwert der Fahrbahn kann auch durch eine optische Abtastung der Fahrbahn oder durch Auswerten der Abrollgeräusche der Räder des Kraftfahrzeugs ermittelt werden.

Ziel der vorliegenden Erfindung ist es, einem Ausbrechen des Kraftfahrzeugs während einer Kurvenfahrt aufgrund eines niedrigen Reibwerts der Fahrbahn oder einer starken Verzögerung des Kraftfahrzeugs durch Erhöhen des von dem Antriebsmotor des Kraftfahrzeugs abgegebenen Moments entgegenzuwirken. Dabei kommt es nicht nur auf eine Korrektur des Minimalwerts der Eingriffsgröße bzw. des abgegebenen Motormoments an.

In bestimmten Betriebspunkten der Brennkraftmaschine oder in bestimmten fahrdynamischen Zuständen des Kraftfahrzeugs kann es u.U. vorteilhaft sein, den Antriebsmotor für eine längere Zeitdauer mit dem vorgegebenen Minimalwert der Eingriffsgröße zu beaufschlagen. Dadurch wird der Gradient, mit dem die Korrektur der Eingriffsgröße auf Null geht, beeinflusst. Als Korrektur des ermittelten Minimalwerts der Eingriffsgröße kommt erfindungsgemäß also sowohl eine Korrektur des Minimalwertes als auch eine Korrektur der Zeitdauer in Betracht, während der der vorgegebene Minimalwert an dem Antriebsmotor anliegt.

Gemäß einer vorteilhaften Weiterbildung der vorliegenden Erfindung wird vorgeschlagen, dass der ermittelte Minimalwert der Eingriffsgröße angehoben wird, falls der Reibwert der Fahrbahn einen vorgebbaren ersten Schwellenwert unterschreitet und/oder die Verzögerung des Kraftfahrzeugs einen vorgebbaren zweiten Schwellenwert überschreitet.

Alternativ oder zusätzlich wird vorgeschlagen, dass der Antriebsmotor für eine längere Zeitdauer mit dem Minimalwert der Eingriffsgröße beaufschlagt wird, falls der Reibwert der Fahrbahn einen vorgebbaren ersten Schwellenwert unterschreitet und/oder die Verzögerung des Kraftfahrzeugs einen vorgebbaren zweiten Schwellenwert überschreitet. Gemäß dieser Weiterbildung erfolgt die Korrektur des vorgegebenen Minimalwerts der Eingriffsgröße dadurch, dass der Gradient, mit dem der Korrekturwert der Eingriffsgröße und somit der Korrekturanteil des von dem Antriebsmotor aufgebrachten Moments auf Null geht, beeinflusst wird.

Gemäß einer bevorzugten Ausführungsform der vorliegenden Erfindung wird vorgeschlagen, dass der Minimalwert der Eingriffsgröße aus zwei Werten ermitelt wird, wobei
- ein erster Wert in Abhängigkeit von der Drehzahl des Antriebsmotors und von einer Querbeschleunigung des Kraftfahrzeugs ermittelt wird;
- ein zweiter Wert in Abhängigkeit von einem Schlupf mindestens eines der Räder des Kraftfahrzeugs und von einer Geschwindigkeit des Kraftfahrzeugs ermittelt wird; und
- der Minimalwert aus der Summe des ersten Werts und des zweiten Werts ermittelt wird.

Dabei gelten die folgenden Zusammenhänge: Je größer die Motordrehzahl ist, desto größer ist der erste Wert der Eingriffsgröße. Durch diese Maßnahme wird die bei steigender Motordrehzahl größer werdende Reibung im Motor kompensiert. Je größer die Querbeschleunigung ist, desto größer ist der erste Wert der Eingriffsgröße. Die Eingriffsgröße wird bei einer entsprechend großen Querbeschleunigung auf den Minimalwert angehoben, damit ein Schleppmoment nicht zu groß ist und somit die Seitenführung des Kraftfahrzeugs gewährleistet ist. Je größer ein Radschlupf ist, desto größer ist der zweite Wert der Eingriffsgröße. Da ein großer Radschlupf auf eine glatte Fahrbahn hindeutet, muss in dieser Situation die Eingriffsgröße erhöht werden. Je höher die Geschwindigkeit des Kraftfahrzeugs ist, desto größer ist der zweite Wert. Mit zunehmender Fahrzeuggeschwindigkeit steigt auch die Gefahr des Ausbrechens des Kraftfahrzeugs in einer Kurve. Durch ein Anheben des ermittelten Minimalwerts der Eingriffsgröße in dieser Situation kann das verhindert werden. Der erste Wert und der zweite Wert werden zu dem vorgegebenen Minimalwert der Eingriffsgröße addiert. Das Verfahren gemäß dieser Ausführungsform ist an sich aus der DE 199 13 825 bekannt. Auf diese Druckschrift wird ausdrücklich Bezug genommen. Der vorgegebene Minimalwert wird dann erfindungsgemäß reibwert- und verzögerungsabhängig korrigiert.

Vorteilhafterweise wird der Minimalwert der Eingriffsgröße in Abhängigkeit von zwei Kennfeldern ermittelt, wobei der erste Wert anhand eines ersten Kennfelds und der zweite Wert anhand eines zweiten Kennfelds ermittelt wird. In dem ersten Kennfeld ist der erste Wert in Abhängigkeit von der Motordrehzahl und der Querbeschleunigung abgelegt. In dem zweiten Kennfeld ist der zweite Wert in Abhängigkeit von dem Radschlupf und der Fahrzeuggeschwindigkeit abgelegt.

Eine weitere Korrekturmöglichkeit des ermittelten Minimalwerts der Eingriffsgröße besteht gemäß einer vorteilhaften Weiterbildung der vorliegenden Erfindung darin, dass der reibwert- bzw. verzögerungsabhängig korrigierte Minimalwert der Eingriffsgröße in Abhängigkeit von einer Steigung einer Fahrbahn, auf der das Kraftfahrzeug fährt, und/oder in Abhängigkeit einer absoluten Höhe, in der sich das Kraftfahrzeug befindet, korrigiert wird und der Antriebsmotor mit dem steigungs- bzw. höhenabhängig korrigierten Minimalwert beaufschlagt wird. Vorteilhafterweise wird der reibwert- bzw. verzögerungsabhängig korrigierte Minimalwert der Eingriffsgröße zur Korrektur mit einem steigungs- und/oder höhenabhängigen Korrekturfaktor multipliziert. Der Korrekturfaktor wird vorzugsweise anhand eines dritten Kennfeldes ermittelt. Dabei gilt folgender qualitativer Zusammenhang: Bei einer Bergabfahrt wird der Minimalwert der Eingriffsgröße nach unten korrigiert, also verkleinert, bei einer Bergauffahrt wird der Minimalwert nach oben korrigiert, also vergrößert.

Gemäß einer anderen vorteilhaften Weiterbildung der vorliegenden Erfindung wird vorgeschlagen, dass der reibwert- bzw. verzögerungsabhängig korrigierte Minimalwert der Eingriffsgröße in Abhängigkeit von der Temperatur des Antriebsmotors korrigiert wird, falls eine Querbeschleunigung des Kraftfahrzeugs vorliegt, und der Antriebsmotor mit dem korrigierten Minimalwert beaufschlagt wird. Es gilt folgender Zusammenhang: Je niedriger die Temperatur des Antriebsmotors ist, desto größer ist ein Korrekturwert, um den der Minimalwert der Eingriffsgröße korrigiert wird. Dadurch sollen die Auswirkungen einer bei kaltem Antriebsmotor größeren Reibung kompensiert werden.

Gemäß noch einer anderen vorteilhaften Weiterbildung der vorliegenden Erfindung wird vorgeschlagen, dass der reibwert- bzw. verzögerungsabhängig korrigierte Minimalwert der Eingriffsgröße in Abhängigkeit von der Stellung eines Schaltgetriebes des Kraftfahrzeugs korrigiert wird, falls eine Querbeschleunigung des Kraftfahrzeugs vorliegt, und der Antriebsmotor mit dem korrigierten Minimalwert beaufschlagt wird. Das Schaltgetriebe kann elektronisch oder mechanisch schaltbar sein. In Abhängigkeit des eingelegten Ganges wird ein Korrekturwert bestimmt, um den der Minimalwert der Eingriffsgröße korrigiert wird. Dabei gilt folgender Zusammenhang: Je niedriger der eingelegte Gang ist, je größer ist der Korrekturwert, da die in dem Antriebsmotor auftretende Reibung bei kleinen Gängen größer ist als bei großen Gängen.

Gemäß noch einer anderen vorteilhaften Weiterbildung der vorliegenden Erfindung wird vorgeschlagen, dass der reibwert- bzw. verzögerungsabhängig korrigierte Minimalwert der Eingriffsgröße in Abhängigkeit von der Art und Anzahl in dem Kraftfahrzeug enthaltener und in Betrieb befindlicher Verbraucher korrigiert wird, falls eine Querbeschleunigung des Kraftfahrzeugs vorliegt, und der Antriebsmotor mit dem korrigierten Minimalwert beaufschlagt wird. Gemäß dieser Weiterbildung wird in Abhängigkeit der eingeschalteten Verbraucher des Kraftfahrzeugs ein weiterer Korrekturwert bestimmt, um den der Minimalwert der Eingriffsgröße korrigiert wird. Es gilt folgender Zusammenhang: Je mehr Verbraucher im Betrieb sind, desto größer ist der Korrekturwert. Je größer die von den eingeschalteten Verbrauchern benötigte Leistung ist, desto größer ist der Korrekturwert. Bei dieser Weiterbildung wird der Tatsache Rechnung getragen, dass nicht das gesamte von dem Antriebsmotor aufgebrachte Moment an die Antriebsräder übertragen wird, sondern ein Teil des aufgebrachten Moments durch in Betrieb befindliche Verbraucher des Kraftfahrzeugs verbraucht. Je mehr Verbraucher sich im Betrieb befinden und je mehr Leistung die Verbraucher benötigen, desto höher ist der Anteil des Motormoments, das nicht auf die Antriebsräder übertragen wird. Bei den Verbrauchern, die in diesem Zusammenhang berücksichtigt werden, handelt es sich um Verbraucher mit einer relativ großen Leistungsaufnahme, bspw. einer Klimaanlage, eine Scheibenheizung oder eine verbesserte Lichtanlage auf der Basis von Xenon-Licht.

Anders als die steigungs- oder höhenabhängige Korrektur erfolgt die temperaturabhängige, die getriebestellungsabhängige und die verbraucherabhängige Korrektur des Minimalwerts der Eingriffsgröße nur, falls eine Querbeschleunigung des Kraftfahrzeugs vorliegt. Anders als bei der steigungs- oder höhenabhängigen Korrektur wird zur Korrektur von Einflüssen der Motortemperatur der Getriebestellung und von Verbrauchern ein motortemperatur-, getriebestellungs- und/oder verbraucherabhängiger Korrekturwert zu dem Minimalwert der Eingriffsgröße addiert.

Gemäß noch einer weiteren bevorzugten Ausführungsform der vorliegenden Erfindung wird vorgeschlagen, dass zur Ermittlung eines Lastwechsels die Stellung eines Fahrpedals des Kraftfahrzeugs oder das von dem Antriebsmotor abgegebene Moment ausgewertet wird. Als Lastwechsel wird ein Übergang von einem Zugbetrieb in einen Schubbetrieb bezeichnet.

Die Art der das abgegebene Moment beeinflussenden Eingriffsgröße hängt von verschiedenen Faktoren ab. Zum einen können für unterschiedliche Antriebsmotoren auch unterschiedliche Eingriffsgrößen eingesetzt werden, durch die das von dem Antriebsmotor abgegebene Moment beeinflusst wird. Bei ein und demselben Antriebsmotor kann es außerdem verschiedene Eingriffsgrößen geben, durch die das von dem Antriebsmotor abgegebene Moment beeinflusst werden kann.

Gemäß einer bevorzugten Ausführungsform der vorliegenden Erfindung wird vorgeschlagen, dass als die das abgegebene Moment beeinflussende Eingriffsgröße eine in einen Brennraum eines als direkteinspritzende Brennkraftmaschine ausgebildeten Antriebsmotors einzuspritzende Kraftstoffmenge herangezogen wird. Bei einer Saugrohreinspritzung kann auch die in das Saugrohr einzuspritzende Kraftstoffmenge herangezogen werden.

Gemäß einer weiteren bevorzugten Ausführungsform der vorliegenden Erfindung wird vorgeschlagen, dass als die das abgegeben Moment beeinflussende Eingriffsgröße bei einem als Brennkraftmaschine ausgebildeten Antriebsmotor ein Zeitpunkt zum Einspritzen von Kraftstoff herangezogen wird.

Gemäß noch einer weiteren bevorzugten Ausführungsform der vorliegenden Erfindung wird vorgeschlagen, dass als die das abgebende Moment beeinflussende Eingriffsgröße ein Zeitpunkt zum Zünden eines in einem Brennraum eines als Brennkraftmaschine ausgebildeten Antriebsmotors befindlichen Kraftstoff-/Luftgemisches herangezogen wird.

Des Weiteren wird vorgeschlagen, dass als die das abgegebene Moment beeinflussende Eingriffsgröße ein Winkel einer Drosselklappe eines als Brennkraftmaschine ausgebildeten Antriebsmotors herangezogen wird.

Schließlich wird vorgeschlagen, dass als die das abgegebene Moment beeinflussende Eingriffsgröße ein Strom oder eine Spannung eines als Elektromotor ausgebildeten Antriebsmotors herangezogen wird.

Als eine weitere Lösung der Aufgabe der vorliegenden Erfindung wird ausgehend von dem Steuergerät der eingangs genannten Art vorgeschlagen, dass das Steuergerät den ermittelten Minimalwert der Eingriffsgröße und/oder die Zeitdauer, für die der Antriebsmotor mit dem Minimalwert beaufschlagt wird, in Abhängigkeit von dem Reibwert einer Fahrbahn, auf der das Kraftfahrzeug fährt, und/oder in Abhängigkeit von einer Verzögerung des Kraftfahrzeugs korrigiert.

Gemäß einer vorteilhaften Weiterbildung der vorliegenden Erfindung wird vorgeschlagen, dass in dem Steuergerät Mittel zur Ausführung des erfindungsgemäßen Verfahrens realisiert sind.

Von besonderer Bedeutung ist die Realisierung des erfindungsgemäßen Verfahrens in der Form eines Speicherelements, das für ein Steuergerät einer Fahrdynamikregelung eines Kraftfahrzeugs vorgesehen ist. Dabei ist auf dem Speicherelement ein Computerprogramm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Speicherelement gespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Die Erfindung betrifft schließlich auch ein Computerprogramm, das zur Ausführung des erfindungsgemäßen Verfahrens geeignet ist, wenn es auf einem Rechengerät, insbesondere auf einem Mikroprozessor, abläuft. Besonders bevorzugt ist dabei, wenn das Computerprogramm auf einem Speicherelement, insbesondere auf einem Flash-Memory, abgespeichert ist.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein Zustandsdiagramm eines erfindungsgemäßen Verfahrens zur Korrektur eines Minimalwerts einer Eingriffsgröße;
- Figur 2: ein Funktionsdiagramm eines erfindungsgemäßen Verfahrens zur Korrektur eines Minimalwerts einer Eingriffsgröße;
- Figur 3: Verläufe verschiedener Korrekturwerte in Abhängigkeit von der Zeitdauer, für die ein korrigierter Minimalwert einer Eingriffsgröße an einem Antriebsmotor eines Kraftfahrzeugs anliegt, für verschiedene Reibwerte einer Fahrbahn, auf der das Kraftfahrzeug fährt;
- Figur 4: ein Funktionsdiagramm weiterer Ausgestaltungen eines erfindungsgemäßen Verfahrens;
- Figur 5: ein Funktionsdiagramm eines Verfahrens zum Hochzählen eines Zeitzählers, der der Zeitdauer entspricht, für die der korrigierte Minimalwert der Eingriffsgröße an dem Antriebsmotor anliegt;
- Figur 6: ein Funktionsdiagramm eines Verfahrens zur rampenförmigen Begrenzung des korrigierten Minimalwerts einer Eingriffsgröße; und
- Figur 7: ein Funktionsdiagramm eines Verfahrens zur Deaktivierung des erfindungsgemäßen Verfahrens.

### Beschreibung der Ausführungsbeispiele

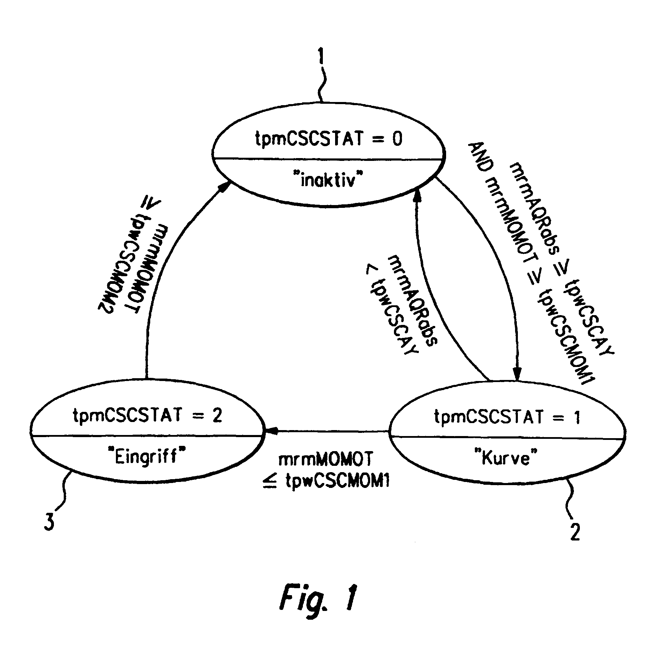

In Fig. 1 sind verschiedene Zustände eines erfindungsgemäßen Verfahrens zur Beeinflussung eines von einem Antriebsmotor eines Kraftfahrzeugs abgegebenen Moments dargestellt. Das von dem Antriebsmotor abgegebene Moment kann über eine Eingriffsgröße beeinflusst werden.

Der Minimalwert der Eingriffsgröße und damit ein Minimalwert eines von dem Antriebsmotor abgegebenen Motormoments wird auf an sich aus dem Stand der Technik bekannte Weise von einem Steuergerät des Antriebsmotors ermittelt. So ist es aus der DE 199 13 825 zur Verbesserung der fahrdynamischen Eigenschaften eines Kraftfahrzeugs bei einem Lastwechsel während einer Kurvenfahrt bekannt, die Eingriffsgröße auf einen Minimalwert anzuheben. Der Antriebsmotor wird dann für eine vorgebbare Zeitdauer mit dem Minimalwert der Eingriffsgröße beaufschlagt und gibt für die Zeitdauer ein entsprechend erhöhtes Motormoment ab.

Erfindungsgemäß wird der ermittelte Minimalwert der Eingriffsgröße in Abhängigkeit von dem Reibwert einer Fahrbahn, auf der das Kraftfahrzeug fährt, und/oder in Abhängigkeit von einer Verzögerung des Kraftfahrzeugs korrigiert. Alternativ oder zusätzlich kann auch die Zeitdauer, für die der Antriebsmotor mit dem Minimalwert der Eingriffsgröße beaufschlagt wird, reibwert- bzw. verzögerungsabhängig korrigiert werden. Dadurch kann das Kraftfahrzeug bei einem Lastwechsel während einer Kurvenfahrt auch in fahrdynamischen Extremsituationen (rutschige Fahrbahn, hohe Verzögerung) in einem fahrdynamisch stabilen Zustand gehalten oder fahrdynamisch stabilisiert werden.

Das erfindungsgemäße Verfahren kann drei Zustände einnehmen, die in Fig. 1 dargestellt sind. In einem ersten Zustand 1 ist das Verfahren "inaktiv". Eine Statusvariable tpmCSCSTAT hat den Wert 0. Von dem ersten Zustand 1 geht das Verfahren in einen zweiten Zustand 2 über, wenn die auf das Kraftfahrzeug wirkende Querbeschleunigung mrmAQRabs größergleich einem zugehörigen Beschleunigungs-Schwellenwert tpwCSCAY ist und wenn das Motormoment mrmMOMOT größergleich einem zugehörigen ersten Schwellenwert tpwCSCMOM1 ist. Der zweite Zustand 2 kennzeichnet eine Kurvenfahrt des Kraftfahrzeugs ("Kurve"). In dem zweiten Zustand 2 hat die Statusvariable tpmCSCSTAT den Wert 1. Von dem zweiten Zustand 2 geht das Verfahren wieder in den ersten Zustand 1 über, wenn die Querbeschleunigung mrmAQRabs kleiner als der zugehörige Beschleunigungs-Schwellenwert tpwCSCAY ist. Sowohl in dem ersten Zustand 1 als auch in dem zweiten Zustand 2 erfolgt keine Veränderung der Eingriffsgröße im Sinne einer Vorgabe eines Minimalwertes.

Von dem zweiten Zustand 2 geht das Verfahren in einen dritten Zustand 3 über, wenn das Motormoment mrmMOMOT kleinergleich dem zugehörigen ersten Schwellenwert tpwCSCMOM1 ist. In dem dritten Zustand 3 ist das Verfahren "aktiv", es erfolgt ein Eingriff, indem ein Minimalwert für die Eingriffsgröße ausgegeben wird. In dem dritten Zustand 3 hat die Statusvariable tpmCSCSTAT den Wert 2. Das Verfahren verlässt den dritten Zustand 3 und geht in den ersten Zustand 1 über, wenn das Motormoment mrmMOMOT größergleich einem zugehörigen zweiten Schwellenwert tpwCSCMOM2 ist.

Soweit ist das Verfahren aus der DE 199 13 825 bekannt, auf die hier ausdrücklich Bezug genommen wird. Um in dem dritten Zustand 3 die Stabilität des Kraftfahrzeugs, insbesondere bei einem Lastwechsel während einer Kurvenfahrt, zu verbessern, wird der vorgegebene Minimalwert der Eingriffsgröße bzw. die Zeitdauer, für die der Antriebsmotor mit dem Minimalwert beaufschlagt wird, gemäß der vorliegenden Erfindung in Abhängigkeit von verschiedenen fahrdynamischen Parametern korrigiert.

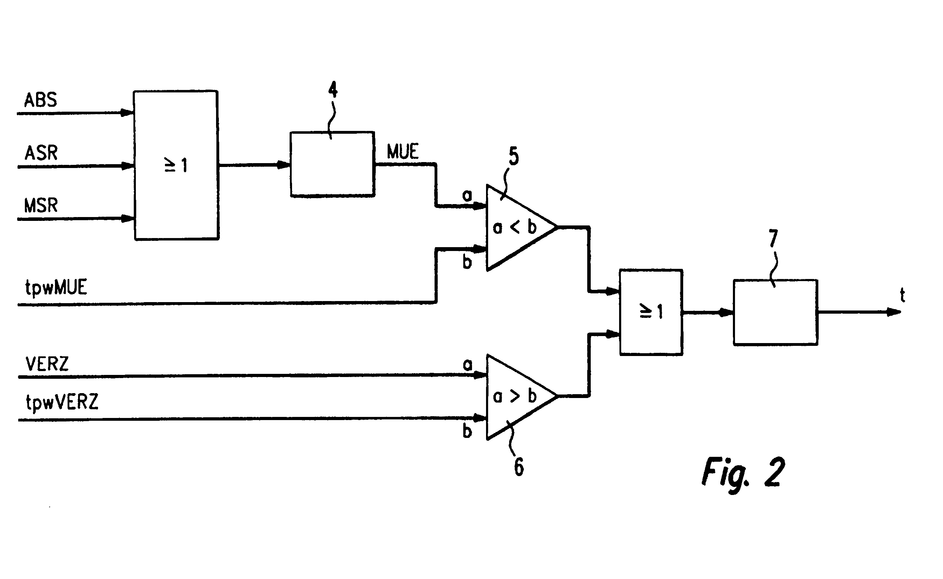

Als fahrdynamische Parameter, in deren Abhängigkeit der Minimalwert der Eingriffsgröße korrigiert wird, wird der Reibwert einer Fahrbahn, auf der das Kraftfahrzeug fährt und/oder eine Verzögerung des Kraftfahrzeugs herangezogen. In Fig. 2 ist ein Funktionsdiagramm einer bevorzugten Ausführungsform des erfindungsgemäßen Verfahrens dargestellt. Dabei wird nicht der ermittelte Minimalwert der Eingriffsgröße korrigiert, sondern die Zeitdauer t, für die der Antriebsmotor mit dem ermittelten Minimalwert beaufschlagt wird.

Um den Reibwert MUE der Fahrbahn zu ermitteln, werden Informationen über die Aktivierung eines Antiblockiersystems ABS, einer Antischlupfregelung ASR und einer Motorschleppmomentregelung MSR herangezogen. In einer Verarbeitungseinheit 4 wird ermittelt, wie oft innerhalb eines vorgebbaren Zeitfensters und/oder mit welcher Intensität eine oder mehrere dieser Funktionen aktiviert wurden. Ein Ausgangssignal MUE der Verarbeitungseinheit 4 wird an eine Vergleichseinheit 5 geführt, wo es mit einem zugehörigen Schwellenwert tpwMUE verglichen wird. Falls das Ausgangssignal MUE kleiner als der Schwellenwert tpwMUE ist, wird von einem niedrigen Reibwert MUE der Fahrbahn ausgegangen.

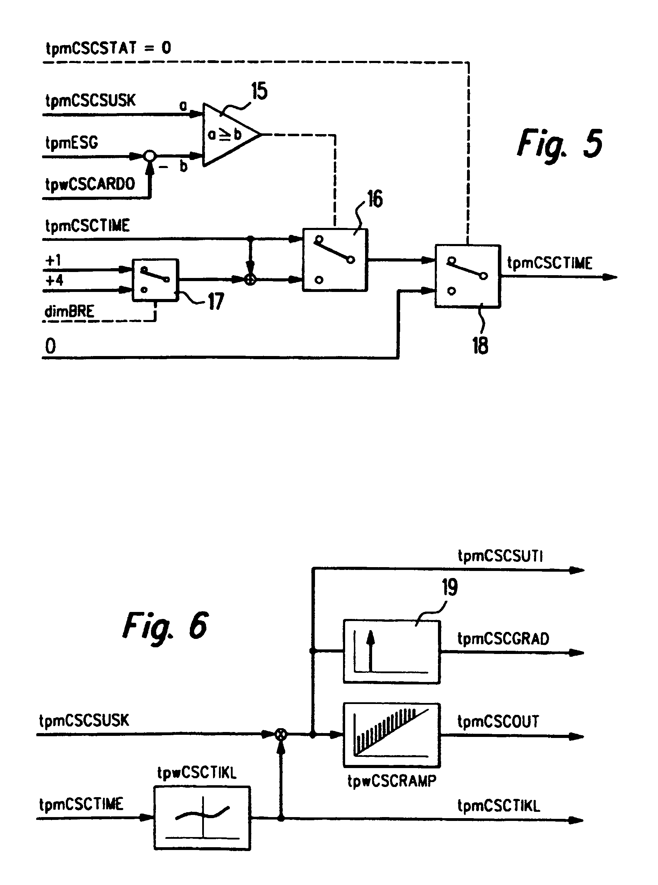

In einer zweiten Vergleichseinheit 6 wird die Verzögerung VERZ des Kraftfahrzeugs mit einem zugehörigen Schwellenwert tpwVERZ verglichen. Falls der Reibwert MUE der Fahrbahn den Schwellenwert tpwMUE unterschreitet und/oder die Verzögerung VERZ den Schwellenwert tpwVERZ überschreitet, wird in einer Verzögerungseinheit 7 die Zeitdauer t, für die der Antriebsmotor mit dem Minimalwert der Eingriffsgröße beaufschlagt wird, verlängert. Ein entsprechendes Funktionsdiagramm ist in Fig. 5 dargestellt.

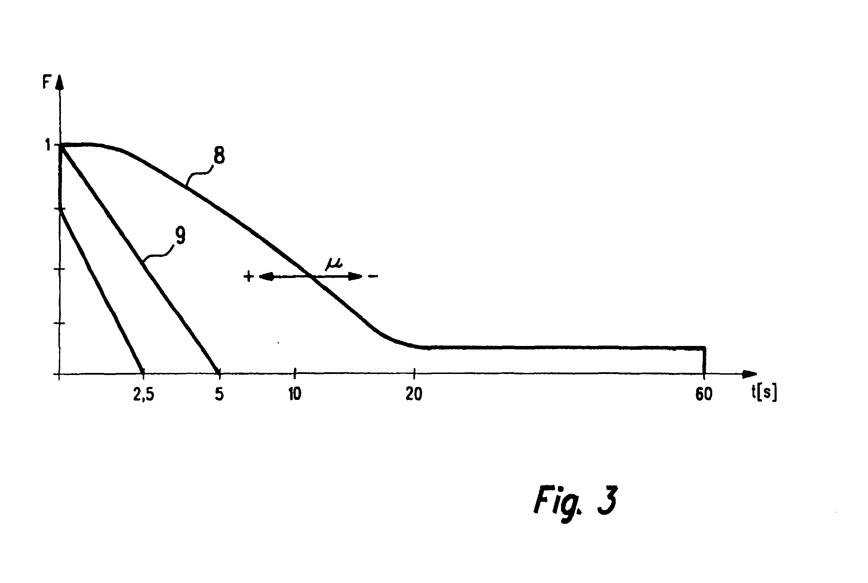

In Fig. 3 sind Verläufe verschiedener Korrekturwerte in Abhängigkeit von der Zeitdauer t, für die der korrigierte Minimalwert der Eingriffsgröße an dem Antriebsmotor anliegt, für verschiedene Reibwerte MUE einer Fahrbahn dargestellt. Die Wirkungsdauer t des erfindungsgemäßen Verfahrens wird - durch einen Doppelpfeil µ verdeutlicht - bei einem niedrigen Reibwert MUE (-) der Fahrbahn verlängert (vgl. Kurve 8). Bei einem höheren Reibwert MUE (+) kann die Wirkungsdauer t des erfindungsgemäßen Verfahrens entsprechend verkürzt werden (vgl. Kurve 9). Somit verlängert die Dauer bzw. die Häufigkeit des Ansprechens eines Indikators für niedrige Reibwerte MUE die Wirkungsdauer t des erfindungsgemäßen Verfahrens.

Anders als in Fig. 2 dargestellt, kann der Reibwert MUE der Fahrbahn auch durch Auswerten der Drehzahlen N der Räder des Kraftfahrzeugs, insbesondere der Antriebsräder, ermittelt werden. Denkbar wäre auch eine optische Auswertung der Fahrbahn oder eine akustische Auswertung der Reifengeräusche. Schließlich könnte der Reibwert MUE der Fahrbahn auch mittels geeigneter in die Reifenwände eingearbeiteter Sensoren, bspw. mittels Dehnmessstreifen DMS, ermittelt werden.

Alternativ zu der in Fig. 2 dargestellten Verlängerung der Wirkungsdauer t des erfindungsgemäßen Verfahrens mittels der Verzögerungseinheit 7 könnte zur Korrektur auch der ermittelte Minimalwert der Eingriffsgröße angehoben werden, falls der Reibwert MUE der Fahrbahn den Schwellenwert tpwMUE unterschreitet und/oder die Verzögerung VERZ den Schwellenwert tpwVERZ überschreitet.

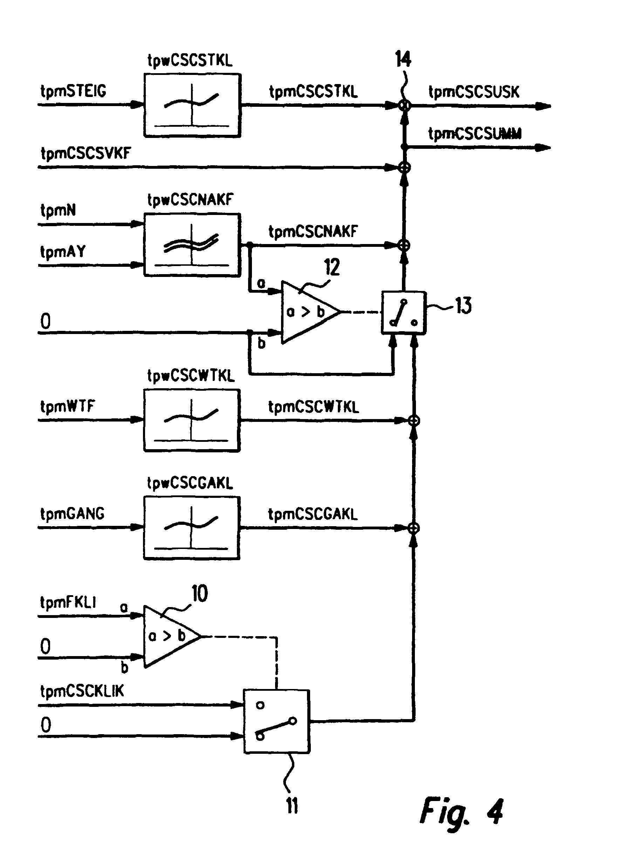

Zusätzlich zu der in Fig. 2 dargestellten Möglichkeit der Korrektur des ermittelten Minimalwerts der Eingriffsgröße kann dieser - wie in Fig. 4 dargestellt - auch in Abhängigkeit von weiteren Fahrdynamikparametern korrigiert werden. Eine Größe tpmN für die Drehzahl des Antriebsmotors und eine weitere Größe tpmAY für die Querbeschleunigung des Kraftfahrzeugs werden einem Kennfeld tpwCSCNAKF zugeführt, anhand dessen ein drehzahl- und querbeschleunigungsabhängiger Minimalwert tpmCSCNAKF für die Eingriffsgröße ermittelt wird.

Der Minimalwert tpmCSCNAKF kann in Abhängigkeit der absoluten Höhe korrigiert werden, in der sich das Kraftfahrzeug befindet. Dazu wird ein der absoluten Höhe entsprechender Offsetwert tpmCSCSVKF zu dem Minimalwert tpmCSCNAKF addiert. Der Offsetwert tpmCSCSVKF ist schlußabhängig und deshalb nicht applizierbar. Außerdem kann der Minimalwert tpmCSCNAKF in Abhängigkeit der Steigung tpmSTEIG der Fahrbahn, auf der das Kraftfahrzeug fährt, korrigiert werden. Dazu wird die Steigung tmpSTEIG einem Kennfeld tpwCSCSTKL zugeführt, anhand dessen ein steigungsabhängiger Korrekturfaktor tpmCSCSTKL ermittelt wird. Der Minimalwert tpmCSCNAKF bzw. der korrigierte Minimalwert wird mit dem Korrekturfaktor tpmCSCSTKL multipliziert.

Zu dem Minimalwert tpmCSCNAKF können weitere Korrekturwerte addiert werden, falls eine Querbeschleunigung des Kraftfahrzeugs vorliegt bzw. wenn der drehzahl- und querbeschleunigungsabhängige Minimalwert tpmCSCNAKF größer 0 ist. Dazu wird der Minimalwert tpmCSCNAKF an eine Vergleichseinheit 12 geführt, wo er mit dem Wert "0" verglichen wird. Das Ausgangssignal der Vergleichseinheit 12 steuert eine Schalteinheit 13 an. Falls der Minimalwert tpmCSCNAKF kleinergleich "0" ist, bleibt die Schalteinheit 13 in der in Fig. 4 dargestellten Position und an ihrem Ausgang liegt der Wert "0" an. Falls der Minimalwert tpmCSCNAKF größer "0" ist, d.h. eine Querbeschleunigung vorliegt, schaltet die Schalteinheit 13 und die weiteren Korrekturwerte tpmCSCWTKL, tpmCSCGAKL und/oder tpmCSCKLIK liegen an dem Ausgang der Schalteinheit 13 an.

Eine Größe tpmWTF für die Temperatur des Antriebsmotors wird einem weiteren Kennfeld tpwCSCWTKL zugeführt, anhand dessen ein temperaturabhängiger Korrekturwert tpmCSCWTKL ermittelt wird. Einem anderen Kennfeld tpwCSCGAKL wird eine Größe tpmGANG für den eingelegten Gang einer Getriebeeinheit des Kraftfahrzeugs zugeführt. Anhand des Kennfelds tpwCSCGAKL wird ein gangstellungsabhängiger Korrekturwert tpmCSCGAKL ermittelt, der zu dem temperaturabhängigen Korrekturwert tpmCSCWTKL addiert wird. Eine weitere Größe tpmFKLE enthält Informationen darüber, ob ein Klimakompressor des Kraftfahrzeugs in Betrieb ist oder nicht. Die Größe tpmFKLE wird einer Vergleichseinheit 10 zugeführt. In Abhängigkeit von einem Ausgangssignal der Vergleichseinheit 10 wird eine Schalteinheit 11 angesteuert. Falls der Klimakompressor in Betrieb ist, wird die Schalteinheit 11 betätigt, so dass am Ausgang der Schalteinheit 11 ein verbraucherabhängiger Korrekturwert tpmCSCKLIK anliegt. Anderenfalls verbleibt die Schalteinheit 11 in der in Fig. 4 dargestellten Stellung und am Ausgang der Schalteinheit 11 liegt "0" an.

Es ist denkbar, in einer Erweiterung des Funktionsdiagramms aus Fig. 4 auch den Betrieb weiterer Verbraucher des Kraftfahrzeugs, bspw. eine Front- oder Heckscheibenheizung oder eine Lichtanlage auf der Basis von Xenon-Licht, mit einem entsprechenden Korrekturwert bei der Korrektur des Minimalwerts tpmCSCNAKF der Eingriffsgröße zu berücksichtigen. Der verbraucherabhängige Korrekturwert tpwCSCKLIK wird zu dem gangstellungsabhängigen Korrekturwert tpmCSCGAKL und dem temperaturabhängigen Korrekturwert tpmCSCWTKL addiert. Wie oben bereits erwähnt, wird die Summe dieser drei Korrekturwerte nur dann zu dem Minimalwert tpmCSCNAKF addiert, wenn auf das Kraftfahrzeug eine Querbeschleunigung wirkt.

Als Ausgangsgrößen des Funktionsdiagramms aus Fig. 4 ergibt sich eine Summe tpmCSCSUMM des Minimalwerts tpmCSCNAKF und des Korrekturwerts tpmCSCSVKF und ggf. der Korrekturwerte tpmCSCWTKL, tpmCSCGAKL und tpmCSCKLEK. Die Summe tpmCSCSUMM der Kennwerte wird an einer Multiplikationsstelle 14 mit dem steigungsabhängigen Korrekturwert tpmCSCSTKL multipliziert. Das Produkt, d. h. die steigungskompensierte Summe, wird als tpmCSCSUSK bezeichnet.

Anhand Fig. 5 wird nachfolgend beschrieben, wie ein Zeitzähler tpmCSCTIME, der der Wirkungsdauer t des erfindungsgemäßen Verfahrens entspricht (vgl. Fig. 3), hochgezählt wird. Das erfindungsgemäße Verfahren wird aktiv, wenn die steigungskompensierte Summe tpmCSCSUSK größergleich dem ermittelten Wert tpmESG für die Einstellgröße abzüglich eines Offset tpwCSCARDO ist. Der Vergleich erfolgt in einer Vergleichseinheit 15. Mit Hilfe eines Ausgangssignals der Vergleichseinheit 15 wird eine Schalteinheit 16 angesteuert. Als Ausgangssignal gibt die Schalteinheit 16 entweder den Zeitzähler tpmCSCTIME oder einen um einen bestimmten Summanden (+1 oder +4) erhöhten Wert des Zeitzählers tpmCSCTIME aus. Falls die Bremsen dimBRE des Kraftfahrzeugs betätigt werden (erhöhte Verzögerung des Kraftfahrzeugs), wird der Zeitzähler tpmCSCTIME um den Summanden "+4" erhöht. Anderenfalls wird er um den Summanden "+1" erhöht. Zwischen den Summanden "+1" und "+4" wird Mit Hilfe einer weiteren Schalteinheit 17 umgeschaltet. Es ist noch eine Schalteinheit 18 vorgesehen, die von einem Reset-Signal tpmCSCSTAT = 0 betätigt wird. Wenn das Reset-Signal tpmCSCSTAT = 0 aktiviert wird, hat der Zeitzähler tpmCSCTIME am Ausgang den Wert "0". Anderenfalls wird der hochgezählte Wert für den Zeitzähler tpmCSCTIME ausgegeben und der Antriebsmotor des Kraftfahrzeugs für eine entsprechende Zeitdauer t mit dem ermittelten Minimalwert der Eingriffsgröße angesteuert.

In Fig. 6 ist ein weiteres Funktionsdiagramm dargestellt, in dem zur Vermeidung von Sprüngen der Eingriffsgröße der korrigierte Minimalwert der Eingriffsgröße über eine zeitliche Rampe tpwCSCRAMP steigungsbegrenzt wird. In einem Kennfeld tpwCSCTIKL wird in Abhängigkeit von dem Zeitzähler tpmCSCTIME ein Bewertungsfaktor tpmCSCTIKL ermittelt. Dieser liegt üblicherweise zwischen 0 und 3. Die steigungskompensierte Summe tpmCSCSUSK wird mit dem Bewertungsfaktor tpmCSCTIKL multipliziert. Ausgangsgröße der Multiplikation ist eine zeitbewertete Summe tpmCSCSUTI. Aus der zeitbewerteten Summe tpmCSCSUTI wird in einem Funktionsblock 19 der Gradient tpmCSCGRAD der Einstellgröße berechnet. Des Weiteren wird aus der zeitbewerteten Summe tpmCSCSUTI mittels eines Kennfeldes tpwCSCRAMP ein steigungsbegrenztes Ausgangssignal tpmCSCOUT ermittelt.

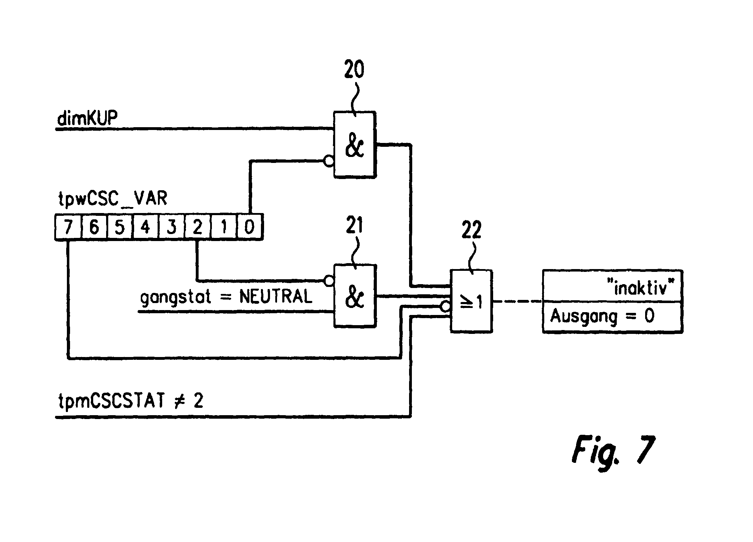

Anhand der Fig. 7 wird verdeutlicht, wann das erfindungsgemäße Verfahren deaktiviert wird. Das ist bspw. der Fall, wenn eine Kupplung dimKUP des Kraftfahrzeugs offen ist und kein Eingriff durch das erfindungsgemäße Verfahren erwünscht ist (UND-Verknüpfung 20). Das Verfahren wird auch dann aktiviert, wenn sich das Getriebe gangstat des Kraftfahrzeugs in einer Neutralstellung NEUTRAL befindet und kein Eingriff durch das erfindungsgemäße Verfahren gewünscht wird (UND-Verknüpfung 21). Außerdem wird das Verfahren deaktiviert, wenn ein Hauptschalter ausgeschaltet ist.

In einer Variablen tpwCSC_VAR ist abgelegt, ob ein Eingriff bei offener Kupplung gewünscht wird (bit 0), ob ein Eingriff in Getriebeneutralstellung gewünscht wird (bit 2) und ob der Hauptschalter eingeschaltet ist (bit 7).

Das erfindungsgemäße Verfahren wird außerdem deaktiviert, wenn die Statusvariable tpmCSCSTAT # 2 ist (vgl. Fig. 1). Liegt eine dieser Voraussetzungen vor, wird das erfindungsgemäße Verfahren deaktiviert und alle Ausgänge werden zurückgesetzt.

## Patentansprüche

1. Verfahren zur Beeinflussung eines von einem Antriebsmotor eines Kraftfahrzeugs abgegebenen Moments (mrmMOMOT), bei dem
- ein während einer Kurvenfahrt des Kraftfahrzeugs auftretender Lastwechsel ermittelt wird;
- falls während einer Kurvenfahrt ein Lastwechsel auftritt, ein Minimalwert (tpmCSCNAKF) einer das abgegebene Moment (mrmMOMOT) beeinflussende Eingriffsgröße ermittelt wird; und
- der Antriebsmotor für eine vorgebbare Zeitdauer (t) mit dem Minimalwert (tpmCSCNAKF) der Eingriffsgröße beaufschlagt wird,
**dadurch gekennzeichnet, dass** der ermittelte Minimalwert (tpmCSCNAKF) der Eingriffsgröße und/oder die Zeitdauer (t) in Abhängigkeit von dem Reibwert (MUE) einer Fahrbahn, auf der das Kraftfahrzeug fährt, und/oder in Abhängigkeit von einer Verzögerung (VERZ) des Kraftfahrzeugs korrigiert wird.

2. Verfahren nach Anspruch 2, **dadurch gekennzeichnet, dass** der ermittelte Minimalwert (tpmCSCNAKF) der Eingriffsgröße angehoben wird, falls der Reibwert (MUE) der Fahrbahn einen vorgebbaren ersten Schwellenwert (tpwMUE) unterschreitet und/oder die Verzögerung (VERZ) des Kraftfahrzeugs einen vorgebbaren zweiten Schwellenwert (tpwVERZ) überschreitet.

3. Verfahren nach Anspruch 1 oder 2, **dadurch gekennzeichnet, dass** der Antriebsmotor für eine längere Zeitdauer (t) mit dem Minimalwert (tpmCSCNAKF) der Eingriffsgröße beaufschlagt wird, falls der Reibwert (MUE) der Fahrbahn einen vorgebbaren ersten Schwellenwert (tpwMUE) unterschreitet und/oder die Verzögerung (VERZ) des Kraftfahrzeugs einen vorgebbaren zweiten Schwellenwert (tpwVERZ) überschreitet.

4. Verfahren nach einem der Ansprüche 1 bis 3, **dadurch gekennzeichnet, dass** der Minimalwert (tpmCSCNAKF) der Eingriffsgröße aus zwei Werten ermittelt wird, wobei
- ein erster Wert in Abhängigkeit von der Drehzahl (tpmN) des Antriebsmotors und von einer Querbeschleunigung (tpmAY) des Kraftfahrzeugs ermittelt wird;
- ein zweiter Wert in Abhängigkeit von einem Schlupf mindestens eines der Räder des Kraftfahrzeugs und von einer Geschwindigkeit des Kraftfahrzeugs ermittelt wird; und
- der Minimalwert (tpmCSCNAKF) aus der Summe des ersten Werts und des zweiten Werts ermittelt wird.

5. Verfahren nach Anspruch 4, **dadurch gekennzeichnet, dass** der Minimalwert (tpmCSCNAKF) der Eingriffsgröße in Abhängigkeit von zwei Kennfeldern ermittelt wird, wobei der erste Wert anhand eines ersten Kennfelds (tpwCSCNAKF) und der zweite Wert anhand eines zweiten Kennfelds ermittelt wird.

6. Verfahren nach einem der Ansprüche 1 bis 5, **dadurch gekennzeichnet, dass** der ermittelte Minimalwert (tpmCSCNAKF) der Eingriffsgröße in Abhängigkeit von einer Steigung (tpmSTEIG) einer Fahrbahn, auf der das Kraftfahrzeug fährt, und/oder in Abhängigkeit einer absoluten Höhe (tpmCSCSVKF), in der sich das Kraftfahrzeug befindet, korrigiert wird und der Antriebsmotor mit dem korrigierten Minimalwert (tpmCSCSUMM; tpmCSCSUSK) beaufschlagt wird.

7. Verfahren nach Anspruch 6, **dadurch gekennzeichnet, dass** der ermittelte Minimalwert (tpmCSCNAKF) der Eingriffsgröße zur Korrektur mit einem steigungs- und/oder höhenabhängigen Korrekturfaktor (tpmCSCSTKL) multipliziert wird.

8. Verfahren nach Anspruch 7, **dadurch gekennzeichnet, dass** der Korrekturfaktor (tpmCSCSTKL) anhand eines dritten Kennfeldes (tpwCSCSTKL) ermittelt wird.

9. Verfahren nach einem der Ansprüche 1 bis 8, **dadurch gekennzeichnet, dass** der ermittelte Minimalwert (tpmCSCNAKF) der Eingriffsgröße in Abhängigkeit von der Temperatur (tpmWTF) des Antriebsmotors korrigiert wird, falls eine Querbeschleunigung des Kraftfahrzeugs vorliegt, und der Antriebsmotor mit dem korrigierten Minimalwert (tpmCSCSUMM; tpmCSCSUSK) beaufschlagt wird.

10. Verfahren nach einem der Ansprüche 1 bis 9, **dadurch gekennzeichnet, dass** der ermittelte Minimalwert (tpmCSCNAKF) der Eingriffsgröße in Abhängigkeit von der Stellung eines Schaltgetriebes (tpmGANG) des Kraftfahrzeugs korrigiert wird, falls eine Querbeschleunigung des Kraftfahrzeugs vorliegt, und der Antriebsmotor mit dem korrigierten Minimalwert (tpmCSCSUMM; tpmCSCSUSK) beaufschlagt wird.

11. Verfahren nach einem der Ansprüche 1 bis 10, **dadurch gekennzeichnet, dass** der ermittelte Minimalwert (tpmCSCNAKF) der Eingriffsgröße in Abhängigkeit von der Art und Anzahl in dem Kraftfahrzeug enthaltener und in Betrieb befindlicher Verbraucher (tpmFKLE) korrigiert wird, falls eine Querbeschleunigung des Kraftfahrzeugs vorliegt, und der Antriebsmotor mit dem korrigierten Minimalwert (tpmCSCSUMM; tpmCSCSUSK) beaufschlagt wird.

12. Verfahren nach einem der Ansprüche 8 bis 11, **dadurch gekennzeichnet, dass** zur Korrektur ein motortemperatur-(tpmCSCWTKL), getriebestellungs- (tpmCSCGAKL) und/oder verbraucherabhängiger Korrekturwert (tpmCSCKLIK) zu dem ermittelten Minimalwert (tpmCSCNAKF) der Eingriffsgröße addiert wird.

13. Verfahren nach einem der Ansprüche 1 bis 12, **dadurch gekennzeichnet, dass** zur Ermittlung eines Lastwechsels die Stellung eines Fahrpedals des Kraftfahrzeugs oder das von dem Antriebsmotor abgegebene Moment (mrmMOMOT) ausgewertet wird.

14. Verfahren nach einem der Ansprüche 1 bis 13, **dadurch gekennzeichnet, dass** als die das abgegebene Moment (mrmMOMOT) beeinflussende Eingriffsgröße bei einem als Brennkraftmaschine ausgebildeten Antriebsmotor eine einzuspritzende Kraftstoffmenge herangezogen wird.

15. Verfahren nach einem der Ansprüche 1 bis 14, **dadurch gekennzeichnet, dass** als die das abgegebene Moment (mrmMOMOT) beeinflussende Eingriffsgröße bei einem als Brennkraftmaschine ausgebildeten Antriebsmotor ein Zeitpunkt zum Einspritzen von Kraftstoff herangezogen wird.

16. Verfahren nach einem der Ansprüche 1 bis 15, **dadurch gekennzeichnet, dass** als die das abgegebene Moment (mrmMOMOT) beeinflussende Eingriffsgröße bei einem als Brennkraftmaschine ausgebildeten Antriebsmotor ein Zeitpunkt zum Zünden eines Kraftstoff-/ Luftgemisches herangezogen wird.

17. Verfahren nach einem der Ansprüche 1 bis 13 oder 16, **dadurch gekennzeichnet, dass** als die das abgegebene Moment (mrmMOMOT) beeinflussende Eingriffsgröße bei einem als Brennkraftmaschine ausgebildeten Antriebsmotor ein Winkel einer Drosselklappe der Brennkraftmaschine herangezogen wird.

18. Verfahren nach einem der Ansprüche 1 bis 13, **dadurch gekennzeichnet, dass** als die das abgegebene Moment (mrmMOMOT) beeinflussende Eingriffsgröße ein Strom oder eine Spannung eines als Elektromotor ausgebildeten Antriebsmotors herangezogen wird.

19. Steuergerät für eine Fahrdynamikregelung eines Kraftfahrzeugs, wobei das Steuergerät
- einen während einer Kurvenfahrt des Kraftfahrzeugs auftretenden Lastwechsel ermittelt;
- falls während einer Kurvenfahrt ein Lastwechsel auftritt, einen Minimalwert (tpmCSCNAKF) einer Eingriffsgröße ermittelt, die ein von einem Antriebsmotor des Kraftfahrzeugs abgegebenes Moment (mrmMOMOT) beeinflusst; und
- den Antriebsmotor für eine vorgebbare Zeitdauer (t) mit dem Minimalwert (tpmCSCNAKF) der Eingriffsgröße beaufschlagt,
**dadurch gekennzeichnet, dass** das Steuergerät den ermittelten Minimalwert (tpmCSCNAKF) der Eingriffsgröße und/oder die Zeitdauer (t) in Abhängigkeit von dem Reibwert (MUE) einer Fahrbahn, auf der das Kraftfahrzeug fährt, und/oder in Abhängigkeit von einer Verzögerung (VERZ) des Kraftfahrzeugs korrigiert.

20. Steuergerät nach Anspruch 19, **dadurch gekennzeichnet, dass** in dem Steuergerät Mittel zur Ausführung eines Verfahrens nach einem der Ansprüche 2 bis 18 realisiert sind.

21. Speicherelement, insbesondere Read-Only-Memory, Random-Access-Memory oder Flash-Memory, für ein Steuergerät einer Fahrdynamikregelung eines Kraftfahrzeugs, auf dem ein Computerprogramm abgespeichert ist, das auf einem Rechengerät, insbesondere auf einem Mikroprozessor, ablauffähig und zur Ausführung eines Verfahrens nach einem der Ansprüche 1 bis 18 programmiert ist.

22. Computerprogramm, **dadurch gekennzeichnet, dass** das Computerprogramm zur Ausführung eines Verfahrens nach einem der Ansprüche 1 bis 18 geeignet ist, wenn es auf einem Rechengerät, insbesondere auf einem Mikroprozessor, abläuft.

23. Computerprogramm nach Anspruch 22, **dadurch gekennzeichnet, dass** das Computerprogramm auf einem Speicherelement, insbesondere auf einem Flash-Memory, abgespeichert ist.

## Claims

1. A method for influencing a torque (mrmMOMOT) which is output by a drive motor of a motor vehicle, in which
- a load change which occurs while the motor vehicle is cornering is determined;
- if a load change occurs during cornering, a minimum value (tpmCSCNAKF) of an engagement variable which influences the torque (mrmMOMOT) which is output is determined; and
- the minimum value (tpmCSCNAKF) of the engagement variable is applied to the drive motor for a predefinable time period (t),
**characterized in that** the minimum value (tpmCSCNAKF) which is determined for the engagement variable and/or the time period (t) are corrected as a function of the coefficient (MUE) of friction of a carriageway on which the motor vehicle is travelling, and/or as a function of a deceleration (VERZ) of the motor vehicle.

2. Method according to Claim 2, **characterized in that** the minimum value (tpmCSCNAKF) which is determined for the engagement variable is raised if the coefficient (MUE) of friction of the carriageway drops below a predefinable first threshold value (tpwMUE) and/or the deceleration (VERZ) of the motor vehicle exceeds a predefinable second threshold value (tpwVERZ).

3. Method according to Claim 1 or 2, **characterized in that** the minimum value (tpmCSCNAKF) of the engagement variable is applied to the drive motor for a relatively long time period (t), if the coefficient (MUE) of friction of the carriageway drops below a predefinable first threshold value (tpwMUE) and/or the deceleration (VERZ) of the motor vehicle exceeds a predefinable second threshold value (tpwVERZ).

4. Method according to one of Claims 1 to 3, **characterized in that** the minimum value (tpmCSCNAKF) of the engagement variable is determined from two values,
- a first value being determined as a function of the rotational speed (tpmN) of the drive motor and of a transverse acceleration (tpmAY) of the motor vehicle;
- a second value being determined as a function of a slip of at least one of the wheels of the motor vehicle and of a speed of the motor vehicle; and
- the minimum value (tpmCSCNAKF) being determined from the sum of the first value and of the second value.

5. Method according to Claim 4, **characterized in that** the minimum value (tpmCSCNAKF) of the engagement variable is determined as a function of two characteristic diagrams, the first value being determined by means of a first characteristic diagram (tpwCSCNAKF) and the second value being determined by means of a second characteristic diagram.

6. Method according to one of Claims 1 to 5, **characterized in that** the minimum value (tpmCSCNAKF) which is determined for the engagement variable is corrected as a function of a positive gradient (tpmSTEIG) of a carriageway on which the motor vehicle is travelling, and/or as a function of an absolute altitude (tpmCSCNVKF) at which the motor vehicle is located, and the corrected minimum value (tpmCSCUMM; tpmCSCSUSK) is applied to the drive motor.

7. Method according to Claim 6, **characterized in that** the minimum value (tpmCSCNAKF) which is determined for the engagement variable is multiplied, for the purpose of correction, by a positive-gradient-dependent and/or altitude-dependent correction factor (tpmCSCSTKL).

8. Method according to Claim 7, **characterized in that** the correction factor (tpmCSCSTKL) is determined by means of a third characteristic diagram (tpwCSCSTKL).

9. Method according to one of Claims 1 to 8, **characterized in that** the minimum value (tpmCSCNAKF) which is determined for the engagement variable is corrected as a function of the temperature (tpmWTF) of the drive motor if a transverse acceleration of the motor vehicle is present and the corrected minimum value (tpmCSCSUMM; tpmCSCSUSK) is applied to the drive motor.

10. Method according to one of Claims 1 to 9, **characterized in that** the minimum value (tpmCSCNAKF) which is determined for the engagement variable is corrected as a function of the position of a change-speed gearbox (tpmGANG) of the motor vehicle if a transverse acceleration of the motor vehicle is present, and the corrected minimum value (tpmCSCSUMM; tpmCSCSUSK) is applied to the drive motor.

11. Method according to one of Claims 1 to 10, **characterized in that** the minimum value (tpmCSCNAKF) which is determined for the engagement variable is corrected as a function of the type and number of electric loads (tpmFKLE) which are contained in the motor vehicle and are in operation if a transverse acceleration of the motor vehicle is present and the corrected minimum value (tpmCSCSUMM; tpmCSCSUSK) is applied to the drive motor.

12. Method according to one of Claims 8 to 11, **characterized in that** for the correction an engine-temperature-dependent correction value (tpmCSCWTKL), gearbox-position-dependent correction value (tpmCSCGAKL) and/or load-dependent correction value (tpmCSCKLIK) are added to the minimum value (tpmCSCNAKF) which is determined for the engagement variable.

13. Method according to one of Claims 1 to 12, **characterized in that**, in order to determine a load change, the position of an accelerator pedal of the motor vehicle or the torque (mrmMOMOT) which is output by the drive motor is evaluated.

14. Method according to one of Claims 1 to 13, **characterized in that** in a drive motor which is embodied as an internal combustion engine a quantity of fuel which is to be injected is used as the engagement variable which influences the torque (mrmMOMOT) which is output.

15. Method according to one of Claims 1 to 14, **characterized in that** in a drive motor which is embodied as an internal combustion engine a time for injecting fuel is used as the engagement variable which influences the torque (mrmMOMOT) which is output.

16. Method according to one of Claims 1 to 15, **characterized in that** in a drive motor which is embodied as an internal combustion engine a time for igniting a fuel/air mixture is used as the engagement variable which influences the torque (mrmMOMOT) which is output.

17. Method according to one of Claims 1 to 13 or 16, **characterized in that** in a drive motor which is embodied as an internal combustion engine an angle of a throttle valve of the internal combustion engine is used as the engagement variable which influences the torque (mrmMOMOT) which is output.

18. Method according to one of Claims 1 to 13, **characterized in that** a current or a voltage of a drive motor which is embodied as an electric motor is used as the engagement variable which influences the torque (mrmMOMOT) which is output.

19. Control device for a vehicle movement dynamics controller of a motor vehicle, wherein the control device
- determines a load change which occurs while the motor vehicle is cornering;
- if a load change occurs during cornering, determines a minimum value (tpmCSCNAKF) for an engagement variable which influences a torque (mrmMOMOT) which is output by a drive motor of the motor vehicle; and
- applies the minimum value (tpmCSCNAKF) of the engagement variable to the drive motor for a predefinable time period (t),
**characterized in that** the control device corrects the minimum value (tpmCSCNAKF) which is determined for the engagement variable and/or the time period (t) as a function of the coefficient (MUE) of friction of a carriageway on which the motor vehicle is travelling, and/or corrects it as a function of a deceleration (VERZ) of the motor vehicle.

20. Control device according to Claim 19, **characterized in that** means for carrying out a method according to one of Claims 2 to 18 are implemented in the control device.

21. Storage element, in particular read-only memory, random access memory or flash memory, for a control device of a vehicle movement dynamics controller of a motor vehicle, on which a computer program which can run on a computing device, in particular on a microprocessor, is stored, and which is programmed to carry out a method according to one of Claims 1 to 18.

22. Computer program, **characterized in that** the computer program is suitable for carrying out a method according to one of Claims 1 to 18 if it runs on a computing device, in particular on a microprocessor.

23. Computer program according to Claim 22, **characterized in that** the computer program is stored on a storage element, in particular on a flash memory.

## Revendications

1. Procédé pour influencer un couple fourni par un moteur d'entraînement de véhicule (mrmMOMOT), selon lequel :
- on calcule un changement de charge se produisant lorsque le véhicule est dans un virage ;
- si pendant un virage un changement de charge intervient, on calcule une valeur minimale (tpmCSCNAKF) d'une grandeur d'intervention influençant le couple fourni (mrmMOMOT) ; et
- on charge le moteur d'entraînement avec la valeur minimale (tpmCSCNAKF) de la grandeur d'intervention pour une durée donnée (t),
**caractérisé en ce que**
on corrige la valeur minimale calculée (tpmCSCNAKF) de la grandeur d'intervention et/ ou la durée (t), en fonction du coefficient de friction (MUE) de la chaussée sur laquelle roule le véhicule, et/ou en fonction d'une décélération (VERZ) du véhicule.

2. Procédé selon la revendication 2,
**caractérisé en ce qu'**
on augmente la valeur minimale calculée (tpmCSCNAKF) de la grandeur d'intervention si le coefficient de friction (MUE) de la chaussée est inférieur à une première valeur seuil donnée (tpwMUE) et/ou si la décélération (VERZ) du véhicule est supérieure à une deuxième valeur seuil donnée (tpwVERZ).

3. Procédé selon la revendication 1 ou 2,
**caractérisé en ce que**
on charge le moteur d'entraînement avec la valeur minimale (tpmCSCNAKF) de la grandeur d'intervention pour une durée (t) prolongée si le coefficient de friction (MUE) de la chaussée est inférieur à une première valeur seuil donnée (tpwMUE) et/ou si la décélération (VERZ) du véhicule est supérieure à une deuxième valeur seuil (tpwVERZ) donnée.

4. Procédé selon l'une quelconque des revendications 1 à 3,
**caractérisé en ce que**
on calcule la valeur minimale (tpmCSCNAKF) de la grandeur d'intervention à partir de deux valeurs,
- une première valeur calculée en fonction de la vitesse de rotation (tpmN) du moteur d'entraînement et d'une accélération transversale (tpmAY) du véhicule ;
- une deuxième valeur calculée en fonction d'un glissement d'au moins l'une des roues du véhicule et d'une vitesse du véhicule ; et
la valeur minimale (tpmCSCNAKF) est calculée à partir de la somme de la première et de la deuxième valeur.

5. Procédé selon la revendication 4,
**caractérisé en ce que**
on calcule la valeur minimale (tpmCSCNAKF) de la grandeur d'intervention en fonction de deux champs caractéristiques, la première valeur étant calculée à l'aide d'un premier champ caractéristique (tpwCSCNAKF) et la deuxième valeur à l'aide d'un deuxième champ caractéristique.

6. Procédé selon l'une quelconque des revendications 1 à 5,
**caractérisé en ce que**
on corrige la valeur minimale calculée (tpmCSCNAKF) de la grandeur d'intervention en fonction d'une pente (tpmSTEIG) d'une chaussée sur laquelle roule le véhicule et/ou en fonction d'une hauteur absolue (tpmCSCVKF) à laquelle se trouve le véhicule, et on charge le moteur d'entraînement avec la valeur minimale corrigée (tpmCSCSUMM ; tpmCSCSUSK).

7. Procédé selon la revendication 6,
**caractérisé en ce que**
pour la correction, on multiplie la valeur minimale calculée (tpmCSCNAKF) de la grandeur d'intervention avec un facteur de correction (tpmCSCSTKL) qui est fonction de la pente et/ ou de la hauteur.

8. Procédé selon la revendication 7,
**caractérisé en ce qu'**
on calcule le facteur de correction (tpmCSCSTKL) à l'aide d'un troisième champ caractéristique (tpwCSCSTKL).

9. Procédé selon l'une quelconque des revendications 1 à 8,
**caractérisé en ce que**
on corrige la valeur minimale calculée (tpmCSCNAKF) de la grandeur d'intervention en fonction de la température (tpmWTF) du moteur d'entraînement s'il s'opère une accélération transversale du véhicule, et on charge le moteur d'entraînement avec la valeur minimale corrigée (tpmCSCSUMM ; tpmCSCSUSK).

10. Procédé selon l'une quelconque des revendications 1 à 9,
**caractérisé en ce que**
on corrige la valeur minimale calculée (tpmCSCNAKF) de la grandeur d'intervention en fonction de la position d'une boîte de vitesse (tpmGANG) du véhicule s'il s'opère une accélération transversale du véhicule, et on charge le moteur d'entraînement avec une valeur minimale corrigée (tpmCSCSUMM ; tpmCSCSUSK).

11. Procédé selon l'une quelconque des revendications 1 à 10,
**caractérisé en ce qu'**
on corrige la valeur minimale calculée (tpmCSCNAKF) de la grandeur d'intervention en fonction du type et du nombre de récepteurs (tpmFKLE) en fonctionnement compris dans le véhicule s'il s'opère une accélération transversale du véhicule, et on charge le moteur avec la valeur minimale corrigée (tpmCSCSUMM ; tpmCSCSUSK).

12. Procédé selon l'une quelconque des revendications 8 à 11,
**caractérisé en ce qu'**
on ajoute une valeur de correction (tpmCSCKLIK) qui est fonction des récepteurs et/ou de la position de la boîte de vitesse (tpmCSCGAKL) et/ ou de la température du moteur (tpmCSCWTKL) à la valeur minimale calculée (tpmCSCNAKF) de la grandeur d'intervention.

13. Procédé selon l'une quelconque des revendications 1 à 12,
**caractérisé en ce que**
pour calculer un changement de charge, on exploite la position d'une pédale d'accélérateur du véhicule ou le couple (mrmMOMOT) fourni par le moteur d'entraînement.

14. Procédé selon l'une quelconque des revendications 1 à 13
**caractérisé en ce qu'**
une quantité de carburant à injecter sert de grandeur d'intervention influençant le couple fourni (mrmMOMOT) dans le cas d'un moteur d'entraînement conçu en tant que moteur à combustion interne.

15. Procédé selon l'une quelconque des revendications 1 à 14,
**caractérisé en ce qu'**
un moment d'injection du carburant sert de grandeur d'intervention influençant le couple fourni (mrmMOMOT) dans le cas d'un moteur d'entraînement conçu en tant que moteur à combustion interne.

16. Procédé selon l'une quelconque des revendications 1 à 15,
**caractérisé en ce qu'**
un point d'allumage d'un mélange carburant/ air sert de grandeur d'intervention influençant le couple fourni (mrmMOMOT) dans le cas d'un moteur d'entraînement conçu en tant que moteur à combustion interne.

17. Procédé selon l'une quelconque des revendications 1 à 13 ou 16,
**caractérisé en ce qu'**
un angle d'un papillon des gaz du moteur à combustion interne sert de grandeur d'intervention influençant le couple fourni (mrmMOMOT) dans le cas d'un moteur d'entraînement conçu en tant que moteur à combustion interne.

18. Procédé selon l'une quelconque des revendications 1 à 13,
**caractérisé en ce qu'**
un courant ou une tension d'un moteur d'entraînement conçu sous forme de moteur électrique sert de grandeur d'intervention influençant le couple fourni (mrmMOMOT).

19. Appareil de commande pour un contrôle dynamique de trajectoire d'un véhicule, capable de :
- calculer un changement de charge intervenant lorsque le véhicule est dans un virage ;
- calculer une valeur minimale (tpmCSCNAKF) d'une grandeur d'intervention influençant le couple fourni (mrmMOMOT) par un moteur d'entraînement du véhicule si un changement de charge intervient pendant un virage ; et
- charger le moteur d'entraînement avec la valeur minimale (tpmCSCNAKF) de la grandeur d'intervention pour une durée donnée (t),
**caractérisé en ce qu'**
il corrige la valeur minimale calculée (tpmCSCNAKF) de la grandeur d'intervention et/ou la durée (t) en fonction du coefficient de friction (MUE) d'une chaussée sur laquelle roule le véhicule, et/ou en fonction d'une décélération (VERZ) du véhicule.

20. Appareil de commande selon la revendication 19,
**caractérisé en ce qu'**
il comporte des moyens de réalisation d'un procédé selon l'une quelconque des revendications 2 à 18.

21. Elément de mémoire, notamment mémoire morte, mémoire vive ou mémoire flash, pour un appareil de contrôle dynamique de trajectoire d'un véhicule, sur lequel on a enregistré un programme informatique pouvant être lu par un ordinateur, notamment un microprocesseur, et programmé pour réaliser un procédé selon l'une quelconque des revendications 1 à 18.

22. Programme informatique,
**caractérisé en ce que**
le programme informatique convient à la réalisation d'un procédé selon l'une quelconque des revendications 1 à 18, lorsqu'il est lu par un ordinateur, notamment par un microprocesseur.

23. Programme informatique selon la revendication 22,
**caractérisé en ce que**
il est enregistré sur un élément de mémoire, notamment sur une mémoire flash.
